# EUROPÄISCHE PATENTSCHRIFT

(11) **EP 0 877 902 B1**
(45) Veröffentlichungstag und Bekanntmachung des Hinweises auf die Patenterteilung: **11.04.2001**
(21) Anmeldenummer: 97951897.4
(22) Anmeldetag: 13.11.1997
(51) Int. Cl.: F23N 1/00

(54) **STEUERSCHALTUNG FÜR EIN GASMAGNETVENTIL**
CONTROL CIRCUIT FOR A GAS MAGNETIC VALVE
CIRCUIT DE COMMANDE POUR UNE VANNE MAGNETIQUE DE GAZ

(30) Priorität: 15.11.1996 DE 19647432
(43) Veröffentlichungstag der Anmeldung: 18.11.1998
(73) Patentinhaber: HONEYWELL B.V., 1101 EA Amsterdam Z.O. (NL)
(72) Erfinder: VEGTER, Derk, NL-7833 BH Nieuw Amsterdam (NL)
(74) Vertreter: Herzbach, Dieter, Dipl.-Ing.
(86) Internationale Anmeldenummer: EP9706335
(87) Internationale Veröffentlichungsnummer: WO9822752

(56) Entgegenhaltungen:
- EP-A- 0 473 451
- DE-A- 3 415 042
- US-A- 3 709 253
- US-A- 4 770 161
- US-A- 4 960 365

## Beschreibung

Es sind Gasventile und Gasdruckregler bekannt, die mit einem einzigen Magnetantrieb zwei verschiedene Funktionen erfüllen. Zum einen wird das Ventil stufenweise in eine MindestDurchflußposition geöffnet, in welcher Gas zu einem Zündbrenner fließt. Anschließend erfolgt ein weiteres modulierendes Öffnen des Gasstroms zu einem Hauptbrenner in Abhängigkeit von einem elektrischen Steuersignal. Vielfach wird ein solches zunächst schrittweises und anschließend modulierendes Öffnen des Gasdurchsatzes mit Hilfe eines Servodruckreglers erzielt, welcher mit seinem Ausgangssteuerdruck das im Hauptgasweg liegende Gasventil pneumatisch zunächst in die Mindestmengenposition öffnet und anschließend modulierend den Hauptgasstrom in Abhängigkeit vom Wärmebedarf über die Mindestmenge hinaus mehr oder weniger weit öffnet. Gasdruckregler mit einer solchen Doppelfunktion sind beispielsweise aus EP 0 462 583 B1, EP 0 508 357 B1 sowie EP 0 740 242 A1 bekannt.

Während das stufenweise Öffnen auf die Mindestgasmenge sowohl bei solchen kombinierten Druckreglern und Gasventilen als auch bei der Verwendung zweier getrennter Ventile im allgemeinen problemlos ist, ergeben sich bisweilen Schwierigkeiten bei der modulierenden Regelung des Gasdurchsatzes, insbesondere, wenn man zugleich mit einem möglichst geringen Erregerstrom für das Magnetventil auskommen möchte. Um diesen Modulationsbetrieb zu verbessern und insbesondere eine eindeutige Zuordnung von Ventilstellung und Steuerstrom zu gewährleisten, kann man in an sich bekannter Weise dem Steuergleichstrom einen Wechselstrom geringer Amplitude überlagern. Hierdurch werden Reibungsverluste verringert und damit eine gleichmäßigere Verstellung des Ventilschließkörpers in Abhängigkeit vom Erregerstrom erzielt. Es hat sich als günstig erwiesen, für den überlagerten Wechselstrom eine Frequenz zwischen 100 und 300 Hz vorzusehen.

Die im Anspruch 1 gekennzeichnende Erfindung schafft eine Steuerschaltung, welche sowohl das modulierende Öffnen des Ventils bewirkt als auch unter Einbeziehung vorhandener Bauteile als Kipp-Generator den zuüberlagernden Wechselstrom erzeugt. Vorteilhafte Ausgestaltung der Erfindung ergeben sich aus den Unteransprüchen.

Die Erfindung wird nachfolgend anhand eines in der Zeichnung wiedergegebenen Ausführungsbeispiels einer solchen Steuerschaltung erläutert. Darin zeigt:
- Figur 1: die Steuerschaltung, und
- Figur 2: eine Ausführungsform eines darin verwendeten steuerbaren Widerstands.

Eine an Netzwechselspannungsklemmen L und N, beispielsweise die Ventilausgangsklemmen eines Gasfeuerungsautomaten, angeschlossene Gleichrichterbrückenschaltung D1 bis D4 speist die Steuerschaltung sowie die Erregerwicklungen PC eines Pilotventils und MC des Hauptbrennerventils. Das Pilotventil PC wird durch einen eine Mindestgasmenge bereitstellenden Mindest-Erregerstrom geöffnet. Es kann diese Mindestgasmenge dem Hauptbrenner oder einem Zündbrenner zuleiten, und kann dann durch eine hier nicht dargestellte Flammenüberwachungseinrichtung beim Vorhandensein der Flamme offengehalten werden und bei Flammenausfall schließen. Das Hauptventil MC kann ein zweistufiges Ventil bzw. ein zweistufiger Servodruckregler sein, der im ersten Schritt das Öffnen eines Zündgaskanals und im zweiten Schritt die modulierende Gaszufuhr zum Hauptbrenner bewirkt. Mit der Erregerspule des Hauptventils MC ist ein Steuertransistor Q2 in Reihe geschaltet, und diese Reihenschaltung liegt über die Wicklung des Pilotventils PC an den beiden Gleichstromversorgungsleitungen L1 und N1. Zwischen die Erregerspule MC und den Steuertransistor Q2 ist ein erster Widerstand R1 eingeschaltet, und der Reihenschaltung von Widerstand R1 und Erregerspule MC ist ein erster Kondensator C1 parallelgeschaitet. Die Reihenschaltung eines zweiten Widerstands R2 mit einem zweiten Kondensator C2 liegt parallel zum ersten Widerstand R1 zwischen den Verbindungspunkten P2 und P6. Der Verbindungspunkt P1 von zweitem Widerstand R2 und zweiten Kondensator C2 ist über einen Entkopplungswiderstand R3 und einen Rückführwiderstand R5 mit der dem ersten Widerstand R1 abgewandten Elektrode, in diesem Falle dem Kollektor, des Steuertransistors Q2 verbunden. Über den Entkopplungswiderstand R3 ist der Verbindungspunkt P1 ferner an die Steuerelektrode eines zweiten Transistors Q1 angeschlossen, dessen Kollektor-Emitterstrecke einerseits über einen vierten Widerstand R4 an die Gleichstromleitung L1 und andererseits über eine Zenerdiode Z1 an den Verbindungspunkt P2 von Widerstand R1 und Erregerspule MC angeschlossen. Der Kollektor des Transistors Q1, d.h. der Verbindungspunkt P3 dieses Transistors mit dem Widerstand R4, liegt an der Steuerelektrode des Steuertransistors Q2. Die beiden Widerstände R3 und R5 bilden eine positive Rückkopplung zum Verbindungspunkt P4 zwischen Steuertransistor Q2 und Pilotventilwicklung PC. Letzterer ist eine Freilaufdiode D5 parallelgeschaltet. Die Steuerelektrode des Transistors Q1 ist an der Verbindungspunkt P5 der beiden im Rückführzweig liegenden Widerstände R3 und R5 angeschlossen. Ein dem Kondensator C2 parallelgeschalteter steuerbarer Widerstand R6 dient der Modulation des Stroms durch die Erregerwicklung MC im Modulationsbereich des Ventils. Dieses wird beispielsweise mit einer einzigen Erregerwicklung sowohl anfänglich auf die Mindestgasmenge geöffnet als auch später im Modulationsbetrieb in Abhängigkeit vom Modulationsstrom mehr oder weniger weit geöffnet. Die Schaltung kann beispielsweise derart ausgelegt sein, daß bei einem Strom von 12,5mA durch die Wicklung MC das Ventil in seine Mindestgasposition geöffnet wird, während sich zwischen 12,5mA und 25mA der Modulationsbereich erstreckt. Wegen der Reibung des Ankers in der Führungshülse des Magnetventils sowie wegen der Reibung der Ventilstange wird die Bewegung des Ventilschließkörpers im allgemeinen nicht gleichförmig sein und nicht genau jeder Änderung der Stromstärke in der Erregerspule folgen können. Deshalb wird dem steuernden Gleichstromsignal ein Wechselstromsignal von beispielsweise 100 bis 300 Hz überlagert.

Der zur Erzeugung dieses Wechselstroms dienende Oszillator ist ein RC-Kipposzillator bestehend aus der Erregerspule MC, dem Widerstand R1 und dem Kondensator C1 sowie einem zweiten RC-Glied mit dem Widerstand R2 und dem Kondensator C2. Hinzu kommt eine die Schwingungen rückkoppelnde Schleife hoher Verstärkung mit dem Transistor Q1 und dem Widerstand R4 als Differentialverstärker sowie die Rückkopplungsleitung über die Widerstände R3 und R5. Die Transistoren Q1 und Q2 bilden einen Verstärker hohen Verstärkungsgrades. Q1 verstärkt das Signal am Verbindungspunkt P5, und dieses verstärkte Signal gelangt von P3 an die Basis von Q2, wo es erneut verstärkt wird und den Strom durch die Erregerwicklungen MC und PC steuert. Aufgrund der hohen Verstärkung und der positiven Rückkopplung über R3, R5 erzeugt dieser Kipposzillator eine Rechteckschwingung mit einer Frequenz zwischen 100 und 300 Hz. Ohne den Kondensator C1 würde der Strom durch MC und PC zu 100% durchmoduliert, wenn man von der Selbstinduktion von MC absieht. Mit Hilfe des Kondensators C1 wird der Modulationsgrad auf etwa 20% des Gleichstroms verringert. Die Frequenz des Wechselstromsignals wird durch die Bemessung der RC-Glieder R1, C1 sowie R2, C2 in Verbindung mit der Rückkopplungsschleife R3, R5 bestimmt, während die Amplitude vom Widerstand R1 und Kondensator C1 in Verbindung mit der Wicklung MC abhängt.

Die Impedanz der Erregerwicklung PC des Pilotventils bildet einen Stromzufuhrpfad für die Erregerwicklung MC des Hauptventils. Gegenüber einer Lösung, bei der der Strom für MC über einen besonderen Widerstand zugeführt wird, hat die Einschaltung von PC in die Stromzuleitung für MC den Vorteil, daß kein besonderer hoch belastbarer Vorwiderstand benötigt wird. Die Impedanz von PC sollte höher sein als die von MC. Bei einer erprobten Ausführungsform hat PC eine Impedanz von 3,6 kOhm und MC 1,6 kOhm.

Der Mindeststrom von beispielsweise 12,5mA wird vom Differentialverstärker Q1/R4 in Verbindung mit der Bezugsspannung an der Zenerdiode Z1 bestimmt, welche im Transistor Q1 mit der am Widerstand R1 stehenden Spannung verglichen wird. Diese hängt ihrerseits vom Strom durch die Erregerwicklung MC ab. Der Transistor Q1 steuert den in Reihe mit der Erregerwicklung MC liegenden Transistor Q2 derart, daß ein Mindeststrom von 12,5mA entsteht, sobald die Gleichspannung an die Leitungen L1 und N2 gelegt wird. Dabei hat der steuerbare Widerstand R6 seinen Minimalwert von beispielsweise 10kOhm. Erhöht man in geeigneter Weise den Widerstandswert des Widerstands R6, so nimmt der vom Spannungsabfall am Widerstand R1 an die Steuerelektrode des Transistors Q1 gelangende, am Abgriff des Spannungsteilers R2/R6 abgegriffene Spannungsanteil zu. Der Transistor Q1 ändert die Spannung an seinem Kollektor und damit am Punkt P3 derart, daß der Transistor Q2 stärker geöffnet wird und somit den Strom durch die Erregerwicklung MC erhöht. Im Endzustand, d.h. am oberen Ende des Modulationsbereichs, erreicht der Widerstand R6 seinen Höchstwert und ist beispielsweise durch einen nicht-dargestellten Schalter abgeschaltet. Ein das Ventil MC für den Mindestgasstrom öffnender Erregerstrom von 12.5mA fließt, wenn der Wert des Widerstands R6 unendlich ist. Der maximale Erregerstom von 25mA fließt, wenn der Widerstand von R6 auf 10kOhm ist verringert ist. Bei einer bewährten Ausführungsform haben die übrigen Bauteile folgende Werte: R1 = 600 Ohm; R2 = R3 = 10kOhm; R4 = 100kOhm; R5 = 4,7 M; Z1 = 6,8V; C1 = 1µF; C2 = 0,22µF.

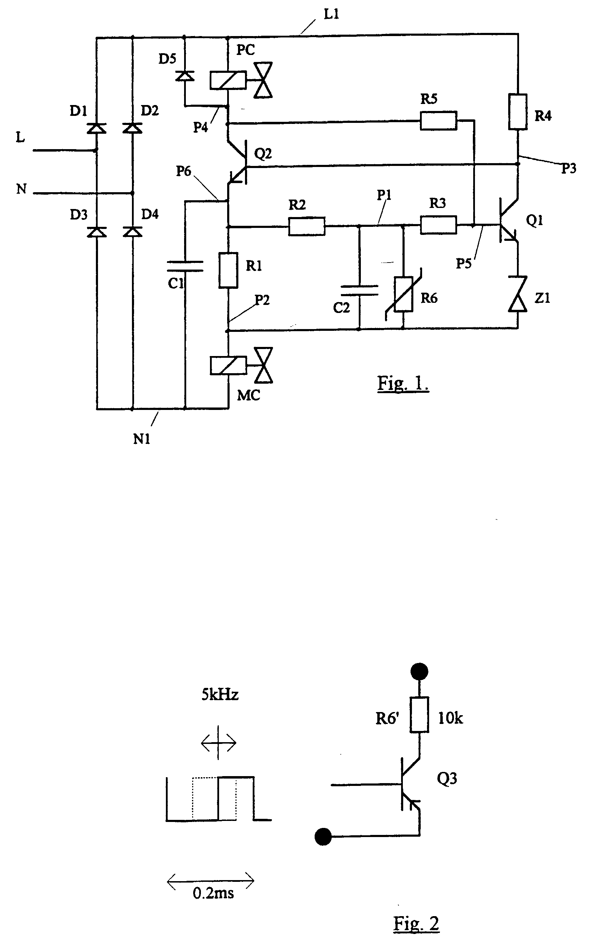

Der steuerbare Widerstand R6 ist in Figur 1 schematisch als Ohm'scher Widerstand dargestellt, wird aber in Wirklichkeit durch eine in ihrem Widerstandswert steuerbare Halbleiterschaltung bekannter Bauweise realisiert. Ein Ausführungsbeispiel hierfür zeigt Figur 2. Ein Widerstand R6' ist mit einem Transistor Q3 in Reihe geschaltet, der an seiner Basis mit einem pulsbreiten-modulierten Signal von 5kHz angesteuert wird. Beträgt die Pulsbreite 100%, so ist Q3 ständig durchgeschaltet und der Widerstandswert der Schaltung R6 beträgt 10kOhm. Ist die Pulsbreite gleich Null und bleibt somit Q3 gesperrt, so ist der Widerstandswert von R6 unendlich.

## Patentansprüche

1. Steuerschaltung für ein gleichstromgespeistes Gasmagnetventil (MC), insbesondere das Magnetventil eines Servodruckreglers, welches durch einen steuerbaren Gleichstrom über eine Mindestdurchflußposition hinaus modulierend in Abhängigkeit von diesem Steuerstrom weiter geöffnet werden kann, und wobei mit der Erregerspule (MC) des Magnetventils ein Steuertransistor (Q2) in Reihe geschaltet ist und diese Reihenschaltung mit den Gleichstrom-Versorgungsklemmen (L1, N1) in Verbindung steht, **dadurch gekennzeichnet**, daß
a) der Steuertransistor (Q2) zugleich als Verstärker in einem RC-Kipposzillator (R1, C1; R2, R3, C2, Q1, Q2, R5) einen dem Steuergleichstrom überlagerten Wechselstrom geringer Amplitude erzeugt, indem
b) zwischen Erregerspule (MC) und Steuertransistor (Q2) ein erster Widerstand (R1) eingeschaltet ist;
c) der Reihenschaltung aus erstem Widerstand (R1) und Erregerspule (MC) ein erster Kondensator (C1) parallelgeschaltet ist;
d) dem ersten Widerstand (R1) die Reihenschaltung eines zweiten Widerstands (R2) mit einem zweiten Kondensator (C2) parallelgeschaltet ist;
e) der Verbindungspunkt (P1) von zweitem Widerstand (R2) und zweitem Kondensator (C2) über wenigstens einen Rückführwiderstand (R3, R5) mit der dem ersten Widerstand (R1) abgewandten Elektrode des Steuertransistors (Q2) in Verbindung steht;
f) der Verbindungspunkt (P1) zwischen zweitem Widerstand (R2) und zweitem Kondensator (C2) ferner über einen dritten Widerstand (R3) an die Steuerelektrode eines zweiten Transistors (Q1) angeschlossen ist, dessen Kollektor-Emitterstrecke einerseits über einen vierten Widerstand (R4) an die eine Gleichspannungsklemme (L1) und andererseits über wenigstens eine Zenerdiode (Z1) an den Verbindungspunkt (P2) von erstem Widerstand (R1) und Erregerspule (MC) angeschlossen ist; während
g) der Verbindungspunkt (P3) von zweitem Transistor (Q1) und viertem Widerstand (R4) an die Steuerelektrode des Steuertransistors (Q2) angeschlossen ist.

2. Steuerschaltung nach Anspruch 1 mit zwei Widerständen (R3, R5) im Rückkopplungsweg vom Verbindungspunkt (P1) des zweiten Widerstands (R2) mit dem zweitem Kondensator (C2), zu der dem ersten Widerstand (R1) abgewandten Elektrode (P4) des Steuertransistors (Q2), **dadurch gekennzeichnet,** daß die Steuerelektrode des zweiten Transistors (Q1) an den Verbindungspunkt (P5) der beiden Rückführwiderstände (R3, R5) angeschlossen ist.

3. Steuerschaltung nach Anspruch 1 oder 2, **dadurch** **gekennzeichnet,** daß zur Steuerung des modulierenden Erregerstroms dem zweiten Kondensator (C2) ein steuerbarer Widerstand (R6) parallelgeschaltet ist, der mit dem zweiten Widerstand (R2) einen Spannungsteiler (R2, R6) bildet.

4. Steuerschaltung nach einem der Ansprüche 1 bis 3, **dadurch gekennzeichnet,** daß zwischen den Steuertransistor (Q2) und die eine Gleichspannungsleitung (L1) die Erregerwicklung (PC) eines einem Gasbrenner eine vorgegebene Mindestgasmenge zuführenden Pilotventils eingeschaltet und dieser Erregerwicklung (PC) wenigstens eine Freilaufdiode (D5) parallelgeschaltet ist.

5. Steuerschaltung nach Anspruch 4, **dadurch gekennzeichnet,** daß die Impedanz des Pilotventils (PC) höher ist als die des Hauptmagnetventils (MC).

6. Steuerschaltung nach einem der Ansprüche 1 bis 5, **dadurch gekennzeichnet,** daß sie über eine Gleichrichter-Brückenschaltung (D1 bis D4) aus dem Wechselspannungsnetz (L, N) gespeist ist.

## Claims

1. Control circuit for a DC-fed gas solenoid valve (MC), in particular the solenoid valve of a servopressure regulator, which can be opened further than a minimum throughflow position by a controllable direct current in a modulating fashion as a function of this control current, a control transistor (Q2) being connected in series with the excitation coil (MC) of the solenoid valve, and this series circuit being connected to the DC supply terminals (L1, N1), characterized in that,
a) as an amplifier in an RC sweep oscillator (R1, C1; R2, R3, C2, Q1, Q2, R5), the control transistor (Q2) simultaneously generates an alternating current of small amplitude superimposed on the control direct current by virtue of the fact that
b) a first resistor (R1) is inserted between the excitation coil (MC) and control transistor (Q2);
c) a first capacitor (C1) is connected in parallel with the series circuit of a first resistor (R1) and excitation coil (MC);
d) the series circuit of a second resistor (R2) with a second capacitor (C2) is connected in parallel with the first resistor (R1);
e) the tie point (P1) of a second resistor (R2) and second capacitor (C2) is connected via at least one feedback resistor (R3, R5) to the electrode of the control transistor (Q2) which is averted from the first resistor (R1);
f) the tie point (P1) between a second resistor (R2) and second capacitor (C2) is further connected by a third resistor (R3) to the control electrode of a second transistor (Q1) whose collector-emitter path is, on the one hand connected via a fourth resistor (R4) to one DC voltage terminal (L1) and, on the other hand is connected via at least one zenerdiode (Z1) to the tie point (P1) of a first resistor (R1) and excitation coil (MC); while
g) the tie point (P3) of a second transistor (Q1) and fourth resistor (R4) is connected to the control electrode of the control transistor (Q2).

2. Control circuit according to Claim 1 with two resistors (R3, R5) in the feedback path from the tie point (P1) of the second resistor (R2) with the second capacitor (C2) to the electrode (P4) of the control transistor (Q2) which is averted from the first resistor (R1), characterized in that, the control electrode of the second transistor (Q1) is connected to the tie point (P5) of two feedback resistors (R3, R5).

3. Control circuit according to Claim 1 or 2, characterized in that, for the purpose of controlling the modulating excitation current, a controllable resistor (R6) which forms a voltage divider (R2, R6) with the second resistor (R2) is connected in parallel with the second capacitor (C2).

4. Control circuit according to one of Claims 1 to 3, characterized in that the excitation winding (PC) of a pilot valve leading a prescribed minimum gas quantity to a gas burner is inserted between the control transistor (Q2) and one DC voltage line (L1) , and at least one freewheeling diode (D5) is connected in parallel with this excitation winding (PC) .

5. Control circuit according to Claim 4, characterized in that the impedance of the pilot valve (PC) is higher than that of the main solenoid valve (MC).

6. Control circuit according to one of Claims 1 to 5, characterized in that it is fed from the AC power supply (L, N) via a rectifier-bridge circuit (D1 to D4).

## Revendications

1. Circuit de commande pour une vanne magnétique de gaz alimentée par courant continu (MC), en particulier la vanne magnétique d'un servo-régulateur de pression, qui peut être ouverte au-delà d'une position de débit minimum au moyen d'un courant continu qui peut être commandé, de manière modulable en fonction de ce courant de commande, et dans lequel un transistor de commande (Q2) est branché en série avec la bobine d'excitation (MC) de la vanne magnétique, ce branchement en série étant raccordé aux bornes d'alimentation de courant continu (L1, N1), caractérisé
a) en ce que le transistor de commande (Q2), en même temps qu'il fait office d'amplificateur dans un oscillateur à bascule RC (R1, C1 ; R2, R3, C2, Q1, Q2, R5), génère un courant alternatif d'amplitude faible superposé au courant continu de commande,
b) tandis qu'une première résistance (R1) est insérée entre la bobine d'excitation (MC) et le transistor de commande (Q2) ;
c) en ce qu'un premier condensateur (C1) est branché en parallèle avec le branchement en série de la première résistance (R1) avec la bobine d'excitation (MC) ;
d) en ce que le branchement en série d'une deuxième résistance (R2) avec un second condensateur (C2) est branché en parallèle avec la première résistance (R1) ;
e) en ce que le point de raccordement (P1) de la deuxième résistance (R2) et du second condensateur (C2) est relié à travers au moins une résistance de réaction (R3, R5) à l'électrode opposée à la première résistance (R1) du transistor de commande (Q2) ;
f) en ce que le point de raccordement (P1) entre la deuxième résistance (R2) et le second condensateur (C2) est relié de plus à travers une troisième résistance (R3) à l'électrode de commande d'un second transistor (Q1) dont le trajet collecteur-émetteur est raccordé d'une part à travers une quatrième résistance (R4) à l'une des bornes de courant continu (L1) et d'autre part à travers au moins une diode Zener (Z1) au point de raccordement (P2) de la première résistance (R1) et de la bobine d'excitation (MC) ;
g) alors que le point de raccordement (P3) du second transistor (Q1) et de la quatrième résistance (R4) est raccordé à l'électrode de commande du transistor de commande (Q2).

2. Circuit de commande selon la revendication 1 avec deux résistances (R3, R5) dans la branche de contre-réaction du point de raccordement (P1) de la deuxième résistance (R2) et du second condensateur (C2), à l'électrode (P4) opposée à la première résistance (R1) du transistor de commande (Q2), caractérisé en ce que l'électrode de commande du second transistor (Q1) est reliée au point de raccordement (P5) des deux résistances de contre-réaction (R3, R5).

3. Circuit de commande selon la revendication 1 ou 2, caractérisé en ce que pour la commande du courant d'excitation assurant la modulation, une résistance (R6) pouvant être commandée est branchée en parallèle avec le second condensateur (C2), formant avec la deuxième résistance (R2) un diviseur de tension (R2, R6).

4. Circuit de commande selon l'une des revendications 1 à 3, caractérisé en ce que la bobine d'excitation (PC) d'une vanne Pilote alimentant un brûleur à gaz avec une quantité de gaz minimum prédéfinie, est insérée entre le transistor de commande (Q2) et l'une des lignes d'alimentation en courant continu (L1) et en ce qu'au moins une diode de roue libre (D5) est branchée en parallèle avec cette bobine d'excitation (PC).

5. Circuit de commande selon la revendication 4, caractérisé en ce que l'impédance de la vanne Pilote (PC) est supérieure à celle de la vanne magnétique principale (MC).

6. Circuit de commande selon l'une des revendications 1 à 5, caractérisé en ce qu'il est alimenté à partir du réseau alternatif (L, N) à travers un montage redresseur en pont (D1 à D4).
